# EUROPÄISCHE PATENTSCHRIFT

(11) **EP 2 554 500 B1**
(45) Veröffentlichungstag und Bekanntmachung des Hinweises auf die Patenterteilung: **01.11.2017**
(21) Anmeldenummer: 12179237.8
(22) Anmeldetag: 03.08.2012
(51) Int. Cl.: B65G 47/84, B65G 47/91

(54) **Vorrichtung und Verfahren zum Herstellen gefüllter Lebensmittel**
Device and method for producing filled food
Dispositif et procédé de fabrication d'aliments remplis

(30) Priorität: 04.08.2011 DE 102011080463
(43) Veröffentlichungstag der Anmeldung: 06.02.2013
(73) Patentinhaber: Deutsches Institut für Lebensmitteltechnik e.V., 49610 Quakenbrück (DE)
(72) Erfinder: Hukelmann, Bernhard, 49610 Quakenbrück (DE)
(74) Vertreter: Taruttis, Stefan Georg

(56) Entgegenhaltungen:
- EP-A1- 2 415 696
- DE-U1- 20 306 885
- DE-U1-202006 004 409
- US-A- 4 707 012
- US-A- 4 887 351
- US-B1- 6 270 135

## Beschreibung

Die Erfindung betrifft eine Vorrichtung und ein Verfahren zum Verarbeiten von Lebensmitteln, insbesondere zum kontinuierlichen Herstellen gefüllter Lebensmittel mit zumindest einer, vorzugsweise einer Vielzahl von Halteeinrichtungen zum Halten jeweils eines Lebensmittels, vorzugsweise mit einer Fülleinrichtung, deren Auslassöffnung gegen die Halteeinrichtung verfahrbar ist. Die Halteeinrichtung erlaubt ein schonendes Halten und Auffalten von Lebensmitteln, insbesondere von frischen oder haltbar gemachten Früchten mittels Unterdrucks und das Abfallen bzw. Abstoßen gefüllter Lebensmittel durch Unterbrechen des Unterdrucks bzw. durch Erzeugen eines Abstoßimpulses.

Die erfindungsgemäße Halteeinrichtung weist bevorzugt als Unterdruckquelle eine Saugeinrichtung auf, die wie ein sogenannter Förderejektor mittels Druckluft angetrieben ist.

### Stand der Technik

Die US 4,707,012 beschreibt eine Saugglocke, die von Bohrungen unterbrochen ist, um für das schonende Ansaugen von Siliciumplatten geeignet zu sein.

Die US 4,887,351 beschreibt einen Sauggreifer, bei dem die Saugöffnung zylindrisch ist und einen mittig angeordneten Rohrabschnitt aufweist, der in der Ebene der Saugöffnung endet. Der offene Querschnitt des mittig angeordneten Rohrabschnitts und die ringförmige Öffnung zwischen dem Rohrabschnitt und der zylindrischen Saugöffnung sind mit einem gemeinsamen Rohr zum Absaugen von Luft verbunden. Der Rohrabschnitt wird durch eine trichterförmig Verjüngung des Saugrohrs getragen, das Bohrungen zum Durchtritt der angesaugten Luft aufweist.

Die US 6,270,135 B1 beschreibt einen Sauggreifer, der sich in Richtung auf die Ansaugöffnung verjüngt, wobei ein kugelförmiges Gewicht innerhalb des Sauggreifers frei beweglich ist, das ohne anliegenden Unterdruck und bei Anordnung des Greifers mit seiner Ansaugöffnung nach unten im Innern des Sauggreifers gegen die Ansaugöffnung anliegt und über die Absaugöffnung hervorsteht.

Die EP 2149517 A2 beschreibt einen Sauggreifer, der zur Erzeugung eines Unterdrucks eine mit Druckluft betriebene Ejektordüse aufweist und eine an der Saugseite angeschlossene Saugkammer, die eine von einem ebenen Gitter abgedeckte Saugöffnung aufspannt. Bislang werden gefüllte Lebensmittel, z.B. gefüllte Früchte, durch manuelles Greifen jeder Frucht und Befüllen hergestellt.

Die DE 20306885 U1 beschreibt einen Sauggreifer zum Aufnehmen und Handhaben von Stückgut, die aus einer Saugleitung und einer Hülle besteht, die von Verstrebungen oder Versteifungen im Ruhezustand offen gehalten wird. Die Verstrebungen oder Versteifungen sind so flexibel, dass sie sich bei Unterdruck mit der Hülle schließen und dem Stückgut anpassen. Die DE 20 2006 004 409 U1 zeigt eine Vorrichtung nach dem Oberbegriff des Anspruchs 1, mit einem Greifer zum Halten einer Frucht gegenüber dem ein Füllrohr angeordnet ist, dessen Öffnung in der Frucht angeordnet werden kann.

### Aufgabe der Erfindung

Die Erfindung stellt sich daher die Aufgabe, eine Vorrichtung und ein Verfahren zur Herstellung gefüllter Lebensmittel bereitzustellen, wobei bevorzugt die Vorrichtung einschließlich innerer Oberflächen leicht zu reinigen ist und weiter bevorzugt keinen Anschluss für eine Unterdruckquelle erfordert.

### Allgemeine Beschreibung der Erfindung

Die Erfindung löst die Aufgabe mit den Merkmalen des Anspruchs 1 und stellt insbesondere eine Vorrichtung zum Herstellen gefüllter Lebensmittel bereit, die eine Haltevorrichtung mit einer Oberfläche mit Trichterform aufweist, in der Durchbrechungen angeordnet sind, die die Oberfläche mit Trichterform mit einer Ansaugöffnung einer Unterdruckquelle verbinden. Die Oberfläche ist durch ihre Trichterform und Durchbrechungen zur schonenden Halterung von Lebensmitteln angepasst, da z.B. Früchte durch den Unterdruck durch den Eintrittsquerschnitt in die Trichterform gesaugt werden und ein Auffalten bzw. Verformen bis maximal gegen die Oberfläche dadurch erfolgt, dass die durch den Unterdruck zwischen dem Lebensmittel und der Oberfläche erzeugte Luftströmung ein an der Oberfläche des Lebensmittels wirkender Sog erzeugt wird, wie dies z.B. beim Bernoulli-Effekt beobachtet wird. Der Eintrittsquerschnitt ist endständig von der Trichterform aufgespannt und hat erfindungsgemäß den größten Querschnitt der Trichterform.

Die Durchbrechungen in der Oberfläche mit Trichterform können die Spitze der Trichterform umfassen, so dass die Oberfläche die durch Durchbrechungen unterbrochene Mantelfläche eines Kegelstumpfs bildet, wobei diese Mantelfläche wie generell bevorzugt gegen ihre Längsmittelachse konvex ist. Erfindungsgemäß sind die Durchbrechungen Schlitze, die sich parallel zur Längsmittelachse der Trichterform erstrecken.

Bevorzugt weist die Oberfläche eine Trichterform mit einer zu dem zu haltenden Lebensmittel passenden Gestalt auf, z.B. kegelförmig, kegelstumpfförmig und/oder gewölbt konkav, bevorzugt gewölbt konvex, optional mit Vorsprüngen, die z.B. punkt- oder linienförmig sind. Die Anzahl, Breite und Länge der Durchbrechungen können an das Lebensmittel angepasst sein, z.B. sind für widerstandsfähige Lebensmittel Durchbrechungen in geringer Anzahl, z.B. 3 bis 12 bevorzugt, so dass die Reinigung erleichtert wird, während für weiche oder druckempfindliche Lebensmittel Durchbrechungen in höherer Anzahl, z.B. von 9 bis 24 oder von 12 bis 18 bevorzugt sind, die ein gleichmäßigeres Ansaugen erlauben.

Optional kann die Oberfläche mit Trichterform um ihre Mittelachse bzw. an ihrer Spitze, die auf die Ansaugöffnung 18 weist, geschlossen sein; bevorzugt ist die Oberfläche mit Trichterform an ihrer Spitze offen bzw. weist eine zentrale Durchbrechung auf, die zumindest abschnittsweise von den Oberflächenabschnitten, die zwischen den Durchbrechungen liegen, in einem Abstand zur Mittelachse der Trichterform eingefasst ist.

Bevorzugt sind die Durchbrechungen in Anzahl und/oder Größe variabel, z.B. durch ein parallel zur Oberfläche mit Trichterform angeordnetes Schließelement, z.B. aus Blech, das um eine gemeinsame Mittelachse gegen die Oberfläche mit Trichterform drehbar ist. Ein solches Schließelement liegt vorzugsweise mit einer Oberfläche an der Oberfläche mit Trichterform an und hat Durchbrechungen, die sich in einer ersten Drehstellung mit den Durchbrechungen der Oberfläche mit Trichterform decken und sich nach Drehen in eine zur ersten Drehstellung versetzte zweite Drehstellung zumindest abschnittsweise mit den Oberflächenabschnitten der Oberfläche mit Trichterform decken, die zwischen deren Durchbrechungen liegen und die Durchlässigkeit der Durchbrechungen reduzieren. Ein solches Schließelement kann z.B. gegen die Oberfläche der Haltevorrichtung angeordnet sein, die der Ansaugöffnung gegenüberliegt bzw. die dem anzusaugenden Lebensmittel zugewandt ist. Das Schließelement weist vorzugsweise die Form der Trichterform auf und kann an seinem Außenumfang einen Rand aufweisen, der den Außenumfang der Haltevorrichtung zumindest abschnittsweise klemmend umfasst.

Die Haltevorrichtung ist zumindest abschnittsweise innerhalb eines Rohrabschnitts angeordnet, der einen Saugabschnitt bildet, in dem eine Ansaugöffnung gebildet ist. Die Längsmittelachse der Trichterform kann gegen den Querschnitt des Rohrabschnitts geneigt sein, bevorzugt ist die Längsmittelachse der Trichterform in der Längsmittelachse des Rohrabschnitts angeordnet. Vorzugsweise liegt der Eintrittsquerschnitt senkrecht zur Längsmittelachse von Rohrabschnitt und Trichterform. Der Querschnitt der Trichterform und der Eintrittsquerschnitt können unabhängig voneinander oder gleich dreieckig, viereckig, polygonal, bevorzugt kreisförmig oder oval sein.

Der Teil des Rohrabschnitts, in dem die Haltevorrichtung angeordnet ist, kann einstückig mit dem Rohrabschnitt ausgebildet sein, der sich über den Saugabschnitt erstreckt, z.B. bis zur Ansaugöffnung, oder ein trennbarer Teil des Rohrabschnitts sein, der z.B. mittels einer Klemm- oder Rasteinrichtung befestigt ist, insbesondere mittels zumindest einer auf der Außenfläche angeordneten Klammer und/oder Hakenverbindung, eines Gewindes und/oder eines Bajonettverschlusses.

Das Verfahren zum Herstellen von Lebensmitteln mit dem Schritt des Haltens eines Lebensmittels durch Ansaugen, z.B. von Früchten, frisch oder eingelegt, erfolgt unter Verwendung der erfindungsgemäßen Vorrichtung. Bevorzugt weist das Verfahren den Schritt des Füllens des in der Haltevorrichtung gehaltenen Lebensmittels auf, z.B. das Füllen mit einem weiteren stückigen Lebensmittel oder einer pastösen Lebensmittelmasse. Optional kann das Verfahren vor dem Füllen den Schritt des Aushöhlens des in der Haltevorrichtung gehaltenen Lebensmittels aufweisen, z.B. das Aushöhlen von Tomaten oder Entkernen, z.B. von Paprika oder Oliven. Es hat sich gezeigt, dass die Saugeinrichtung mit Haltevorrichtung besonders zum Halten von Lebensmitteln geeignet ist, die ihre ursprüngliche Hohlform, zumeist kegel-, schlauch-, kugel- oder birnenförmige Form verloren haben und zusammengedrückt sind, z.B. durch Einlegen in Lake oder Öl in höheren Schichten, insbesondere Südfrüchte, eingelegte Tomaten, Paprika, einschließlich Glocken- und Kirschpaprika, und Pepperoni, da die Anordnung einer Frucht in der Haltevorrichtung mittels des erzeugten Unterdrucks zu einem schonenden Auffalten der Frucht führt, so dass eine Hohlform erzeugt wird, vorzugsweise die natürliche Form annähernd wiederhergestellt wird. Das Halten und Auffalten erlaubt ein einfaches Füllen der Frucht. Das effektive und schonende Auffalten von Früchten wird darauf zurückgeführt, dass der durch die Durchbrechungen wirkende Unterdruck bzw. die durch den Unterdruck in die Haltevorrichtung gerichtete Luftströmung die Frucht mittels des Bernoulli-Effekts gegen die Oberfläche der Haltevorrichtung zieht, wobei diese Oberfläche bevorzugt generell eine Trichterform aufweist.

Die Haltevorrichtung überdeckt den Querschnitt eines Rohrabschnitts, an den die Unterdruckquelle angeschlossen ist. Bevorzugt weist die Vorrichtung zumindest zwei, bevorzugter 6 bis 30 oder 10 bis 20 Haltevorrichtungen auf, die z.B. in einer gemeinsamen Ebene auf einer um eine Drehachse drehbar gelagerten Basis angeordnet sind, wobei bevorzugt die Eintrittsquerschnitte senkrecht zur Radialen der Drehachse angeordnet sind, insbesondere im gleichen radialen Abstand zur Drehachse. Eine Fülleinrichtung kann gegen die Ebene beweglich gelagert sein, in der die Eintrittsquerschnitte angeordnet sind. Eine solche Fülleinrichtung ist vorzugsweise in Abhängigkeit von der Drehstellung der Basis gesteuert und zum Eintritt einer Fülldüse in jeweils zumindest in einen Eintrittsquerschnitt eingerichtet, so dass eine Fülldüse durch den Eintrittsquerschnitt in ein in der Haltevorrichtung angeordnetes Lebensmittel positioniert werden kann und das Lebensmittel durch die Fülldüse befüllt werden kann.

Die Unterdruckquelle kann dadurch mit jeder Haltevorrichtung verbunden sein, dass eine Leitung, die mit der Unterdruckquelle verbunden ist, an eine Seite einer in sich drehbaren Kupplung angeschlossen ist und mittels eines Verteilers jede Haltevorrichtung mittels einer Leitung an die andere Seite der drehbaren Kupplung angeschlossen ist.

In bevorzugter Ausführungsform ist die Unterdruckquelle eine Saugeinrichtung, die nach Art eines Förderejektors mittels Druckluft Unterdruck erzeugt. Weiter bevorzugt weist jede Halteeinrichtung eine individuelle Saugeinrichtung auf, die gegenüber des Ansaugöffnung am Rohrabschnitt angeordnet ist. In dieser Ausführungsform kann die Druckluftquelle mittels einer Leitung an eine Seite einer Kupplung angeschlossen sein, die vorzugsweise in sich drehbar ist, und mittels eines Verteilers jede Saugeinrichtung einer Haltevorrichtung mit einer Leitung an die andere Seite der optional drehbaren Kupplung angeschlossen sein.

Die erfindungsgemäß als Unterdruckquelle bevorzugte Saugeinrichtung weist in einem Gehäuse einen Zentralkanal auf, der vorzugsweise entlang der Längsmittelachse des Gehäuses angeordnet ist. Der Zentralkanal weist eine erste Öffnung auf, die von einer konvexen Fläche um den Zentralkanal aufgespannt wird. Die konvexe Fläche erstreckt sich vorzugsweise rotationssymmetrisch um die Längsachse des Zentralkanals und weist besonders bevorzugt eine zum Radius der Längsmittelachse des Zentralkanals parabelförmige Krümmung auf, deren Steigung in Richtung auf die Längsmittelachse des Zentralkanals zunimmt, d.h. deren Steigung mit abnehmendem Radius größer wird, um eine zur Längsmittelachse zunehmende Krümmung zu bilden. Der Zentralkanal weist im Anschluss an die konvexe Fläche seinen kleinsten Querschnitt auf und weitet sich ab diesem kleinsten Querschnitt in Richtung auf seine zweite Öffnung, die der ersten Öffnung gegenüber liegt, auf, vorzugsweise mit konisch zunehmendem Querschnitt.

Die erste Öffnung des Zentralkanals wird von einer ringförmigen Auslassöffnung eines Eintrittskanals begrenzt. Dabei ist die ringförmige Auslassöffnung durch eine von der konvexen Fläche beabstandete Schulter gebildet, sodass der Querschnitt der Auslassöffnung in einem an die erste Öffnung angrenzenden Abschnitt angeordnet ist, vorzugsweise um einen axialen Abschnitt der Längsachse des Zentralkanals beabstandet ist. Die Schulter ist vorzugsweise ringförmig, sodass sie mit der beabstandeten konvexen Fläche, die die erste Öffnung aufspannt, eine ringförmige Auslassöffnung um die Längsachse des Zentralkanals bildet.

Gegenüber der ersten Öffnung, und um die ringförmige Auslassöffnung beabstandet, weist die Saugeinrichtung einen Saugabschnitt auf, der die Ansaugöffnung aufspannt, an welche die Haltevorrichtung mittels des Rohrabschnitt angeschlossen ist.

Die Ansaugöffnung weist vorzugsweise einen offenen Querschnitt auf, wobei der Querschnitt des von dem Rohrabschnitt gebildeten Saugabschnitts von Stegen oder einem Gitter überspannt sein kann, die das Eindringen angesaugter Gegenstände, insbesondere von Lebensmittelbestandteilen vermindern. Vorzugsweise weist ein Gitter, das den Saugabschnitt, vorzugsweise in einem Abstand zur Ansaugöffnung, überspannt, Gitteröffnungen mit einem Querschnitt auf, der gleich oder kleiner ist als der Querschnitt des Zentralkanals an dessen Abschnitt kleinsten Querschnitts. In dieser Ausführung werden nur Bestandteile durch das Gitter angesaugt, die auch durch den Abschnitt kleinsten Querschnitts des Zentralkanals treten können, so dass Verstopfungen des Zentralkanals vermieden werden. Gitter oder Stege können innerhalb des Rohrabschnitts zwischen Ansaugöffnung und Haltevorrichtung angeordnet sein, z.B. zu 10% bis 80% oder bis 50% der Entfernung zwischen Ansaugöffnung und Haltevorrichtung. Die Saugeinrichtung erlaubt daher, das zu haltende bzw. zu befüllende Lebensmittel mittels erzeugten Unterdrucks gegen die Oberfläche mit Trichterform zu bewegen, die den Querschnitt des Rohrabschnitts überspannt, wobei das Lebensmittel zumindest teilweise in Trichterform gezogen wird bzw. sich an die Oberfläche mit Trichterform anlegt.

Stege oder Gitter, die die Ansaugöffnung bzw. den Saugabschnitt überspannen, können Durchlassöffnungen aufweisen, die kleiner als der zu transportierende Gegenstand sind, da die Saugeinrichtung generell eingerichtet ist, bei Druckluftzufuhr den Gegenstand gegen die Ansaugöffnung anzusaugen und bei Unterbrechung der Druckluftzufuhr den Gegenstand, z.B. unter Schwerkrafteinfluss, von der Ansaugöffnung abfallen zu lassen. Entsprechend weist die Saugeinrichtung vorzugsweise ein Ventil auf, das eingerichtet ist, periodisch für die Druckluftzufuhr zur ringförmigen Auslassöffnung zu öffnen, so dass dann ein Lebensmittel an die Oberfläche mit Trichterform angesaugt wird, und entsprechend die Druckluftzufuhr zu unterbrechen, um das Lebensmittel von der Oberfläche mit Trichterform abfallen zu lassen.

Die zweite Öffnung des Zentralkanals ist mit einer Austrittsöffnung verbunden, aus der die durch die ringförmige Auslassöffnung einströmende Druckluft in Mischung mit durch die Ansaugöffnung angesaugter Luft und angesaugten festen und/oder flüssigen Bestandteilen austritt. Denn die die erste Öffnung aufspannende konvexe Fläche erzeugt bei Beaufschlagung der ringförmigen Auslassöffnung mit Druckluft einen Unterdruck, der in den Saugabschnitt wirkt, wobei die aus der ringförmigen Auslassöffnung austretende Druckluft entlang der konvexen Fläche in den Zentralkanal strömt und durch dessen gegenüberliegende zweite Öffnung austritt.

Optional kann die zweite Öffnung des Zentralkanals zumindest teilweise, insbesondere vollständig verschließbar sein, z.B. mittels eines Ventils, das an der zweiten Öffnung oder an dem an die zweite Öffnung anschließenden Austrittskanal angeordnet ist. Das Ventil kann unmittelbar an der zweiten Öffnung angeordnet sein oder an einer Abluftleitung, die an der zweiten Öffnung des Zentralrohrs angeschlossen ist und den Austrittskanal bildet. Der Schritt des Verschließens der zweiten Öffnung führt in einem Verfahren mit der Saugeinrichtung dazu, dass ein an der Ansaugöffnung angesaugtes Lebensmittel von der Oberfläche mit Trichterform abgestoßen bzw. abgeblasen wird. Denn das Verschließen der zweiten Öffnung verhindert das Ausströmen der mit angesaugter Luft vermischten Druckluft durch den Zentralkanal und erzeugt einen Überdruck in der Saugeinrichtung, der durch die Ansaugöffnung austritt.

Bevorzugt wird die Austrittsöffnung dadurch gebildet, dass die zweite Öffnung des Zentralkanals mit einem Austrittskanal verbunden ist, der in der Austrittsöffnung mündet. Die Austrittsöffnung weist optional einen Querschnitt auf, der in Richtung auf die Ebene gerichtet ist, in der die Ansaugöffnung angeordnet ist, und vorzugsweise parallel zum Querschnitt der Saugöffnung liegt, sodass aus der Austrittsöffnung austretende feste oder flüssige Bestandteile in Richtung auf den an der Ansaugöffnung angeordneten Gegenstand austreten.

In einer Ausführungsform wird der Austrittskanal von einem Abschnitt des Gehäuses gebildet, der in einem Abstand um die Oberfläche der Leitung angeordnet ist, die dem Eintrittskanal gegenüber liegt. Auf diese Weise können Eintrittskanal und Austrittskanal koaxial zum Zentralkanal angeordnet sein und durch eine Leitung voneinander getrennt sein, die zwischen Gehäuse und Außenwandung des Zentralkanals angeordnet ist.

In einer weiteren Ausführungsform wird der Austrittskanal von der Innenwand eines Gehäuses und dem Rohrabschnitt gebildet, der den Saugabschnitt bildet und eine Schulter aufweist, die mit der beabstandeten konvexen Fläche an der ersten Öffnung des Zentralkanals die ringförmige Auslassöffnung begrenzt. Das Gehäuse umfasst das Zentralrohr, das den Zentralkanal bildet, so dass die Oberfläche des Zentralrohrs, die gegenüber dem Zentralkanal liegt, mit der Innenwand des Gehäuses und einem Teil des Rohrabschnitts den Austrittskanal bildet.

Vorzugsweise weist das Gehäuse einen Druckluftanschluss und den anschließenden Eintrittskanal auf, der Druckluft zur ringförmigen Auslassöffnung leitet. Der Eintrittskanal ist vorzugsweise in einem Abschnitt als Rohr oder Schlauch ausgebildet und weist einen um die ringförmige Auslassöffnung angeordneten Ringkanalabschnitt auf, der bevorzugt koaxial zur ringförmigen Auslassöffnung ist. Der Ringkanalabschnitt hat vorzugsweise einen rotationssymmetrisch um die ringförmige Auslassöffnung angeordneten konstanten Querschnitt. Der als Rohr oder Schlauch ausgebildete Abschnitt des Eintrittskanals kann außerhalb des Gehäuses angebracht sein, oder vorzugsweise innerhalb des Gehäuses verlaufen. Besonders bevorzugt verläuft der Eintrittskanal innerhalb zumindest einer Haltestange, die den Rohrabschnitt mit dem Gehäuse verbindet und z.B. an einem Gehäuseabschnitt befestigt ist, der gegenüber der Ansaugöffnung, z.B. am zweiten Ende, angeordnet ist. Bevorzugt ist der Gehäuseabschnitt gegenüber der Ansaugöffnung als Trägerplatte ausgebildet, die eine Befestigungseinrichtung zur Befestigung der Saugeinrichtung s an einem Maschinen- oder Roboterarm bzw. an einer rotierbaren Basis aufweist und die optional den Druckluftanschluss trägt. Entsprechend weist bevorzugt das Gehäuse gegenüber der Ansaugöffnung eine Trägerplatte auf, die mittels zumindest eines Trägers mit dem Rohrabschnitt verbunden ist. In dieser Ausführungsform ist bevorzugt, dass das Gehäuse von der zweiten Öffnung des Zentralrohrs beabstandet ist, insbesondere dadurch, dass die Trägerplatte in einem Abstand von der zweiten Öffnung angeordnet ist, so dass das Volumen zwischen der Innenwand des Gehäuses und dem Zentralrohr den Austrittskanal bildet, so dass z.B. durch die Vergrößerung des Querschnitts vom Zentralkanal zum Austrittskanal eine Reduktion der Strömungsgeschwindigkeit und/oder eine Reduktion der Geräuschentwicklung an der Austrittsöffnung erreicht wird.

Optional ist das Gehäuse gegenüber der zweiten Öffnung des Zentralrohrs, z.B. die Deckelplatte, nach innen konvex ausgebildet, z.B. kalottenförmig, mit parabelförmigem Querschnitt, oder kegelförmig, und bevorzugt zur Längsachse des Zentralrohrs symmetrisch, so dass das Gehäuse bzw. die Deckelplatte in Richtung auf das Zentralrohr ragen. Diese Ausführungsform ist durch die geringere Geräuschentwicklung beim Betrieb vorteilhaft, z.B. im Vergleich mit einem Gehäuse mit zylindrischem Innenquerschnitt.

Bevorzugt ist die Saugeinrichtung dadurch leicht zu reinigen und ist insbesondere zur Verwendung für die Reinigung in einer automatischen Spülmaschine geeignet, dass das Zentralrohr lösbar an einem von der ersten Öffnung beabstandeten Abschnitt des Rohrabschnitts angeordnet ist. In dieser Ausführungsform kann das Zentralrohr auf seiner gegenüber dem Zentralkanal angeordneten Oberfläche eine erste Anlagefläche aufweisen, die sich zumindest anteilig, vorzugsweise umfänglich geschlossen um das Zentralrohr erstreckt. Das Zentralrohr ist dadurch lösbar am Rohrabschnitt angeordnet, dass die erste Anlagefläche des Zentralrohrs gegen eine zweite Anlagefläche, die am Rohrabschnitt angeordnet ist, lösbar anstößt, optional mit der zweiten Anlagefläche verrastbar ist und insbesondere nur gegen die zweite Anlagefläche anliegt und durch die Schwerkraft und/oder die bei Zutritt von Druckluft erzeugte Kraft gegen die zweite Anlagefläche belastet ist. In dieser Ausführungsform kann das Zentralrohr durch Entrasten bzw. durch Bewegen ohne Lösen einer Verbindung von der zweiten Anlagefläche entfernt werden, so dass für eine Reinigung das Zentralrohr vom Rohrabschnitt und den an diesem angeordneten Elementen einfach getrennt werden kann.

Die Saugeinrichtung weist bevorzugt eine von einem Rohrabschnitt, der einen Saugabschnitt bildet, aufgespannte Ansaugöffnung auf, wobei in einem Abstand zur Ansaugöffnung eine um die ringförmige Auslassöffnung vom Saugabschnitt beabstandete konvexe Oberfläche angeordnet ist, die eine erste Öffnung eines in einem Zentralrohr gebildeten Zentralkanals aufspannt, wobei die konvexe Fläche in einem axialen Abschnitt mit dem kleinsten Querschnitt des Zentralkanals mündet, an welchen sich ein Abschnitt des Zentralkanals anschließt, der sich bis zu einer der ersten Öffnung gegenüberliegenden zweiten Öffnung aufweitet, und die ringförmige Auslassöffnung über einen Eintrittskanal mit einem Druckluftanschluss verbunden ist, wobei das Zentralrohr längs seiner Längsachse verschieblich in einer Ausnehmung des Rohrabschnitts geführt ist, bis eine erste Anlagefläche, die das Zentralrohr auf seiner Außenfläche gegenüber dem Zentralkanal aufweist, an einer dazu parallelen zweiten Anlagefläche des Rohrabschnitts anliegt, wobei vorzugsweise das Zentralrohr von einem Gehäuse umfasst ist.

Bevorzugt ist die zweite Anlagefläche zumindest abschnittsweise, bevorzugter vollständig parallel zur ersten Anlagefläche, um bei Anordnung gegeneinander eine hinreichende Dichtung zwischen dem Eintrittskanal und dem Zentralkanal zu bilden. Vorzugsweise ist die erste Anlagefläche in einem axialen Abschnitt zwischen der von der konvexen Fläche aufgespannten ersten Öffnung und der gegenüberliegenden zweiten Öffnung des Zentralrohrs angeordnet und die zweite Anlagefläche ist in dem Abstand zur Schulter des Rohrabschnitts angeordnet, der gleich dem Abstand der ersten Anlagefläche zur ersten Öffnung plus der axialen Erstreckung der ringförmigen Auslassöffnung ist. Weiter bevorzugt erstrecken sich erste und zweite Anlagefläche radial zur Längsmittelachse des Zentralrohrs.

Bevorzugt ist die zweite Anlagefläche an einem Stutzen des Rohrabschnitts angeordnet, der gegenüber der Ansaugöffnung liegt. Der Stutzen umfasst bevorzugt einen Anteil des Eintrittskanals und bildet mit der ringförmigen Schulter des Rohrabschnitts den Ringkanalabschnitt, der sich um die ringförmige Auslassöffnung erstreckt. Optional weist ein Stutzen Ausnehmungen in dem an ein Gehäuse angrenzenden Abschnitt auf. Das Gehäuse kann mit dem Stutzen verbunden sein, z.B. mittels Eingriffs von Stutzen und einem an die Austrittsöffnung angrenzenden Abschnitt des Gehäuses. Bevorzugt weist das Gehäuse eine Trägerplatte auf, die mittels zumindest eines Trägers, der sich vorzugsweise parallel zum Zentralrohr erstreckt, mit dem Stutzen verbunden. Besonders bevorzugt sind zumindest 2, bevorzugter 3 Träger zwischen Trägerplatte und Stutzen angeordnet, von denen zumindest ein Träger einen rohrförmigen Abschnitt des Eintrittskanals bildet. Optional kann der Sauggreifer genau einen Träger aufweisen, der zwischen Trägerplatte und Stutzen angeordnet ist und einen rohrförmigen Abschnitt des Eintrittskanals bildet.

Optional ist ein Stellglied am Zentralrohr angeordnet, mit dem das Zentralrohr gegenüber der Schulter des Rohrabschnitts bewegt werden kann, insbesondere parallel zur Längsachse des Zentralrohrs bewegt werden kann. Ein solches Stellglied kann das vollständige Zentralrohr gegenüber der ersten Öffnung bewegen, oder einen Abschnitt des Zentralrohrs gegenüber der ersten Öffnung bewegen, z.B. wenn das Stellglied zwei Abschnitte des Zentralrohrs gegeneinander bewegt. Der dem zweiten Ende zugewandte Abschnitt eines in zwei Abschnitte geteilten Zentralrohrs ist dabei vorzugsweise am Gehäuse fixiert. Mittels eines solchen Stellglieds kann der Abstand der ersten Öffnung bzw. der konvexen Fläche des Zentralrohrs zur Schulter des Rohrabschnitts eingestellt werden, so dass die ringförmige Auslassöffnung durch das Stellglied einstellbar ist, und damit die Stärke des Unterdrucks, der, insbesondere bei gleichem Druck der Druckluft, durch die in die ringförmige Auslassöffnung einströmende Druckluft erzeugt wird. Überdies dient ein solches Stellglied der Steuerung der Luftmenge, die durch den Zentralkanal strömt, so dass z.B. in der Ausführungsform mit einem Ventil, das die zweite Öffnung des Zentralkanal verschließt, die bei geschlossenem Zentralkanal aus der Ansaugöffnung tretende Luftmenge gesteuert wird. Ein solches Stellglied, das den Querschnitt bzw. die Größe der ringförmigen Auslassöffnung einstellt, kann z.B. zwischen der ersten und zweiten Anlagefläche angeordnet sein oder zwischen dem Zentralrohr und dem Gehäuse. Das Stellglied kann z.B. ein Piezoelement aufweisen und zwischen erster und zweiter Anlagefläche angeordnet sein. Alternativ kann das Stellglied zwei Abschnitte des Zentralrohrs längs der Mittelachse des Zentralrohrs gegeneinander bewegen, die z.B. gegeneinander veschieblich sind oder mittels eines Gewindes miteinander in Eingriff stehen.

Optional kann das Stellglied durch einen Drucksensor gesteuert sein, der im Saugabschnitt des Rohrabschnitts angeordnet ist, so dass sich im Verfahren eine Regelung des Unterdrucks an der Ansaugöffnung ergibt. Entsprechend weist die Saugeinrichtung in einer bevorzugten Ausführungsform einen im Saugabschnitt angeordneten Drucksensor auf, der das Stellglied steuert, z.B. um im Verfahren einen vorgegebenen Unterdruck an der Ansaugöffnung einzuregeln.

Optional steht das Zentralrohr mit dem Rohrabschnitt in Eingriff, wenn die die erste gegen die zweite Anlagefläche angeordnet ist, z.B. in Eingriff mittels Gewinde oder mittels Bajonettverschlusses. In dieser Ausführungsform kann das Stellglied eine Stellschraube und/oder einen Stellmotor aufweisen und zwischen Rohrabschnitt und Zentralrohr angeordnet sein, wobei das Zentralrohr mit einem Gewinde des Rohrabschnitts drehbar in Eingriff steht.

In dieser Ausführungsform kann das Zentralrohr optional ausschließlich durch Anordnung seiner ersten Anlagefläche gegen die am Rohrabschnitt angeordnete zweite Anlagefläche positionsgenau am Rohrabschnitt angeordnet sein, bevorzugt in Kombination mit der Führung des Zentralrohrs längs seiner Längsachse in dem Rohrabschnitt, um mit der ersten Öffnung die ringförmige Auslassöffnung zu bilden, da beim Betrieb die durch die ringförmige Auslassöffnung strömende Druckluft einen Unterdruck erzeugt, der die konvexe Fläche des Zentralrohrs gegen die Anlagefläche belastet. Wenn die erste Anlagefläche von einem z.B. ringförmigen Ansatz um das Zentralrohr gebildet wird, kann der innerhalb des Gehäuses erzeugte Überdruck den Ansatz des Zentralrohrs gegen die zweite Anlagefläche belasten und halten. Entsprechend kann die Saugeinrichtung dieser Ausführungsform ohne stoffschlüssige oder klemmende Verbindung bzw. Schraubverbindung zwischen dem Zentralrohr und dem Rohrabschnitt ausgebildet sein.

In einer Ausführungsform kann die Saugeinrichtung einen Rohrabschnitt mit einer vorzugsweise kreisförmigen Schulter und eine in einem Abstand zu der Schulter angeordnete zweite Anlagefläche und einen zwischen der Schulter und der zweiten Anlagefläche angeordneten Ringkanalabschnitt, der mit einem Eintrittskanal verbunden ist, sowie ein Zentralrohr mit einer ersten Öffnung, die von einer konvexen ringförmigen Fläche eingefasst ist, einer gegenüberliegenden zweiten Öffnung und einer ersten Anlagefläche, die parallel zur zweiten Anlagefläche ausgebildet, gegen die zweite Anlagefläche angeordnet ist und zwischen erster und zweiter Öffnung am Zentralrohr angeordnet ist, aufweisen oder daraus bestehen. Dabei kann eine Austrittsöffnung dadurch gebildet sein, dass die zweite Öffnung des Zentralkanals mit dem Austrittskanal verbunden ist, der insbesondere von der Innenwand des Gehäuses und der Außenoberfläche des Zentralrohrs gebildet ist, wobei der Austrittskanal in eine Austrittsöffnung mündet, die in Richtung auf die Ebene angeordnet ist, in der die Ansaugöffnung aufgespannt ist.

Generell kann die Austrittsöffnung in Alternative zu der Öffnung zwischen Gehäuse und dem Rohrabschnitt, der die Ansaugöffnung bildet, von einem Ende einer Abluftleitung gebildet sein, die an der zweiten Öffnung des Zentralrohrs angeschlossen ist. Diese alternative Ausführungsform erlaubt die Ableitung der Abluft, die aus der zweiten Öffnung des Zentralrohrs austritt, in eine größere Entfernung von dem Gehäuse. Diese Ausführungsform ist dahingehend vorteilhaft, dass die Geräuschentwicklung beim Betrieb am Gehäuse selbst geringer ist.

Vorzugsweise wird der Eintrittskanal, der in der ringförmigen Auslassöffnung mündet, von der Außenwandung des Zentralkanals und einer zu dieser beabstandeten Leitung, die vorzugsweise zylindrisch ist, gebildet. Der Eintrittskanal ist mit einer Zuleitung mit einem Druckluftanschluss verbunden, an den eine Druckluftquelle anschließbar ist. Bei Verwendung der erfindungsgemäßen Saugeinrichtung in einem Verfahren zur Herstellung gefüllter Lebensmittel wird der Druckluftanschluss mit Druckluft beaufschlagt, die durch den Eintrittskanal strömt und durch die ringförmige Auslassöffnung etwa senkrecht zur Längsachse des Zentralkanals strömt. Auf diese Weise wird die konvexe Oberfläche, die sich radial um die Längsachse des Zentralkanals erstreckt, von radial zur Längsachse des Zentralkanals strömender Druckluft angeströmt. Im Zusammenwirken mit dem sich vergrößernden Durchmesser des Zentralkanals in dem Abschnitt, der sich an dessen Abschnitt mit geringstem Querschnitt angrenzend an die konvexe Fläche anschließt, wird ein Unterdruck erzeugt, der durch den Rohrabschnitt in die von diesem aufgespannte Ansaugöffnung wirkt. Die Ansaugöffnung liegt in dem Rohrabschnitt, der endständig die Haltevorrichtung aufweist, so dass der Unterdruck durch die Durchbrechungen bis in den Eintrittsquerschnitt der Haltevorrichtung wirkt.

Ein Vorteil der erfindungsgemäßen Vorrichtung liegt darin, dass damit auch Lebensmittel gehalten werden können, die den Eintrittsquerschnitt nur teilweise überdecken, da allein der Unterdruck bzw. die Luftströmung durch die Durchbrechungen der Haltevorrichtung ausreicht. Daher eignet sich die Vorrichtung insbesondere zur Verwendung als Haltevorrichtung bzw. in einem Verfahren zum schonenden Halten für empfindliche und/oder löchrige Lebensmittel. Entsprechend liegt ein Vorteil der Vorrichtung darin, dass Lebensmittel auch bei größeren Leckagen zwischen Eintrittsquerschnitt und daran angeordnetem Lebensmittel gehalten und bearbeitet werden können. Daher eignet sich die Saugeinrichtung insbesondere zur Verwendung als Transport- und/oder Haltevorrichtung bzw. in einem Verfahren zum Transport und/oder Halten für druck- und/oder bruchempfindliche Lebensmittel, z.B. frische oder haltbar gemachte Früchte, insbesondere eingelegte Früchte.

Die durch die ringförmige Auslassöffnung austretende Druckluft tritt in Mischung mit der Luft und festen bzw. flüssigen Bestandteilen, die durch die Ansaugöffnung eintreten, durch die erste Öffnung, durch den Zentralkanal und nach Durchströmen des Austrittskanal aus der Austrittsöffnung. Da der Zentralkanal in seinem Abschnitt, der an die konvexe Fläche gegenüber der ersten Öffnung angrenzt, seinen geringsten Querschnitt aufweist, können angesaugte Bestandteile, die durch diesen geringsten Querschnitt des Zentralkanals hindurchtreten, durch die Strömung längs des Zentralkanals durch dessen zweite Öffnung austreten, und anschließend durch den Austrittskanal und die Austrittsöffnung austreten, ohne von einer Unterdruckquelle angesaugt zu werden. Auf diese Weise werden durch die besondere Strömungsführung mögliche Verschmutzungen außerhalb der Saugeinrichtung vermieden. Bei Anordnung der Austrittsöffnung in Richtung auf die Ebene, in der die Ansaugöffnung angeordnet ist, können vom angesaugten Gegenstand gelöste feste oder flüssige Bestandteile wieder auf den angesaugten Gegenstand zurückübertragen werden. Alternativ kann die Austrittsöffnung eine Abluftleitung, z.B. einen Abluftschlauch aufweisen, optional mit daran angeschlossenem Filter oder Zyklon zur Abscheidung von festen oder flüssigen Bestandteilen von austretender Luft.

Der Zentralkanal wird mit einem Zentralrohr gebildet, an dessen erstem Ende die erste Öffnung des Zentralkanals angeordnet ist, und dessen gegenüberliegendes zweites Ende die zweite Öffnung aufweist. Die dem Zentralkanal gegenüberliegende Außenwandung des Zentralrohrs bildet in der bevorzugten Ausführungsform gemeinsam mit einer das Zentralrohr umfassenden Leitung, die vorzugsweise zylindrisch ist, den Eintrittskanal für Druckluft.

In einer optionalen Ausführungsform besteht das Zentralrohr aus zumindest zwei Abschnitten, von denen ein erster Abschnitt den Bereich des Zentralkanals von dessen erster Öffnung bis zumindest in den geringsten Querschnitt des Kanals, bevorzugter bis in einen Bereich des sich konisch aufweitenden Zentralkanals umfasst und einem angrenzenden zweiten Abschnitt, der den Zentralkanal fortsetzt, beispielsweise dessen sich konisch aufweitenden Abschnitt, und die zweite Öffnung umfasst, oder in der zweiten Öffnung endet. Besonders bevorzugt sind der erste und der zweite Abschnitt des Zentralrohrs gegeneinander entlang der Längsachse des Zentralkanals verschieblich, beispielsweise indem sie mit mittels Gewindeeingriffs gegeneinander längs der Längsachse des Zentralkanals beweglich sind.

Vorzugsweise umfasst das Gehäuse das zumindest abschnittsweise koaxial in der zylindrischen Leitung angeordnete Zentralrohr mit Abstand, durch welchen der Austrittskanal zwischen der Leitung und dem Gehäuse gebildet wird.

### Genaue Beschreibung der Erfindung

Die Erfindung wird nun genauer mit Bezug auf die Figuren beschrieben, die schematisch
- in Figur 1 eine Ausführungsform der Vorrichtung zeigt,
- in Figur 2 eine Ausführungsform der Saugeinrichtung im Schnitt zeigt,
- in Figur 3 eine Ausführungsform der Saugeinrichtung im Schnitt zeigt,
- in Figur 4 eine bevorzugte Ausführungsform der Saugeinrichtung im Schnitt und
- in Figur 5 die Ausführungsform von Figur 3 in einer anderen Schnittebene zeigt.

In den Figuren bezeichnen die Bezugsziffern funktionsgleiche Elemente. Die in den Figuren beschriebenen Einzelheiten sind erfindungsgemäß kombinierbar, auch wenn sie mit Bezug auf verschiedene Figuren beschrieben sind.

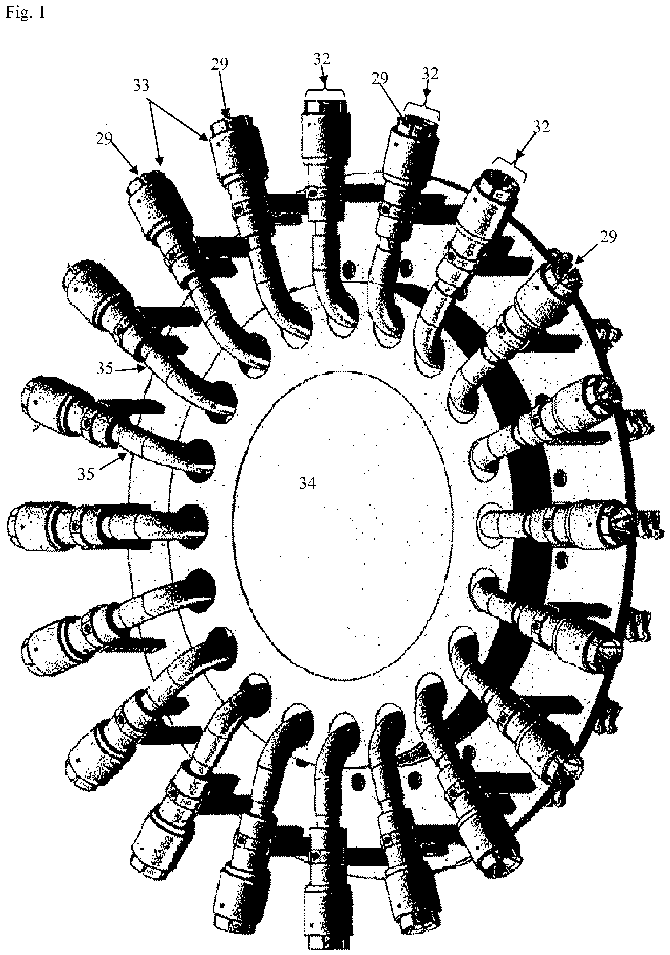

Figur 1 zeigt eine Vielzahl von Haltevorrichtungen 28, die radial zu einer Drehachse an einer Basis 34 befestigt sind. Die Haltevorrichtungen 28 sind so angeordnet, dass ihre jeweiligen Eintrittsquerschnitte 32 senkrecht zur Radialen liegen, die von der Drehachse ausgehen, wobei die Eintrittsquerschnitte 32 von der Drehachse weg gerichtet sind. Die Eintrittsquerschnitte werden von Oberflächen 31 jeder Haltevorrichtung 28 aufgespannt und weisen je 6 schlitzförmige Durchbrechungen 29 auf, die parallel zur und symmetrisch um die Längsmittelachse der Haltevorrichtung 28 angeordnet sind. Die Haltevorrichtungen 28 weisen Abluftleitungen 35 auf, die durch Ausnehmungen der Basis 34 geführt sein können. Die Haltevorrichtungen 28 weisen zur Erzeugung des Unterdrucks eine Saugeinrichtung 33 auf, die mit Druckluft betrieben werden. Die Abluftleitungen 35 dienen zur Ableitung der Mischung aus Druckluft und durch den Eintrittsquerschnitt angesaugter Luft, um die Austrittsöffnung zur Reduzierung von Geräuschen in einem größeren Abstand von den Haltevorrichtungen anzuordnen.

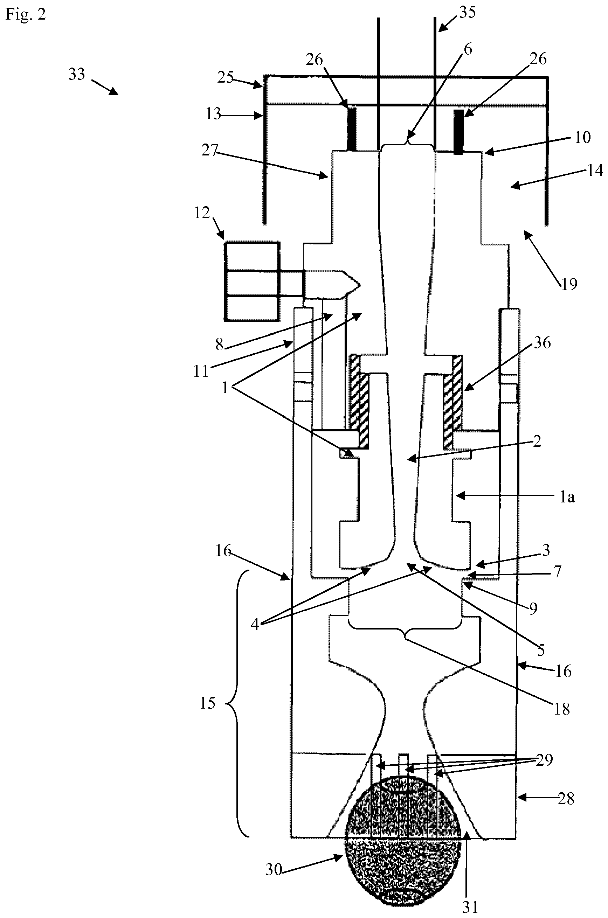

Wie generell in Figuren 2 bis 5 gezeigt ist, weist die als Unterdruckquelle bevorzugte Saugeinrichtung 33 ein Zentralrohr 1 auf, in dem ein Zentralkanal 2 angeordnet ist, vorzugsweise koaxial zum Zentralrohr 1. Am ersten Ende 3 des Zentralkanals 2 spannt eine konvexe Fläche 4 des Zentralkanals 2 die erste Öffnung 5 des Zentralkanals 2 auf. Die konvexe Fläche 4 erstreckt sich vom kleinsten Querschnitt des Zentralkanals 2 bis in die Ebene, in der die erste Öffnung 5 aufgespannt ist. Vorzugsweise weist die konvexe Fläche 4 einen senkrecht zur Längsmittelachse des Zentralkanals 2 parabelförmigen Querschnitt auf, dessen Steigung von der Ebene, in der die erste Öffnung 5 angeordnet ist, zum Abschnitt des Zentralkanals 2 mit dessen geringstem Querschnitt zunimmt. Gegenüber der Ebene, in der die erste Öffnung 5 aufgespannt ist, erstreckt sich angrenzend an den Bereich des kleinsten Querschnitts des Zentralkanals 2 ein Abschnitt, dessen Querschnitt zur zweiten Öffnung 6 zunimmt, insbesondere sich konisch vom kleinsten Querschnitt des Zentralkanals 2 bis zur zweiten Öffnung 6 aufweitet. Die zweite Öffnung 6 bildet das zweite Ende 10 des Zentralrohrs gegenüber dessen erstem Ende 3. Angrenzend an die erste Öffnung 5 ist eine ringförmige Auslassöffnung 7 angeordnet, an die ein Eintrittskanal 8 für Druckluft angeschlossen ist. Vorzugsweise ist die ringförmige Auslassöffnung 7 etwa senkrecht zur Längsmittelachse des Zentralkanals 2 ausgerichtet, besonders bevorzugt senkrecht zur konvexen Fläche 4, um diese tangential mit austretender Druckluft anzuströmen.

Die ringförmige Auslassöffnung 7 wird von einem von der Zentralachse des Zentralkanals 2 beabstandeten Bereich der konvexen Fläche 4 und einer von dieser beabstandeten Schulter 9 gebildet, die z.B. an den Eintrittskanal 8 grenzt.

Der Eintrittskanal 8 wird von einem Bereich der Außenwandung 1a des Zentralrohrs 1 gebildet und zumindest abschnittsweise von einer Leitung 11, die besonders bevorzugt zylindrisch ist und koaxial zum Zentralkanal 2 angeordnet ist. Ein Druckluftanschluss 12, der am Gehäuse 13 angeordnet ist, ist mittels eines Druckluftkanals mit dem Eintrittskanal 8 verbunden.

An der zweiten Öffnung 6 des Zentralkanals 2 ist ein Austrittskanal 14 angeschlossen, der in einer Austrittsöffnung 19 mündet. Der Austrittskanal 14 wird in dieser Ausführungsform abschnittsweise von der Innenwandung des Gehäuses 13 und der Außenwandung der Leitung 11 gebildet. Der Austrittskanal 14 kann von der Innenwandung des Gehäuses 13 gebildet werden, das in einem Abstand um das Zentralrohr 1 angeordnet ist. Die Austrittsöffnung 19 ist entsprechend einer bevorzugten Ausführungsform auf die Ebene gerichtet, in der die Ansaugöffnung 18 aufgespannt ist.

Wie insbesondere in Figur 2 gezeigt ist, ist eine Abluftleitung 35 an der zweiten Öffnung 6 angeschlossen, wobei Abluftleitung 35 durch das Gehäuse 13 geführt ist, oder alternativ kein Gehäuse das Zentralrohr 1 an dessen zweitem Ende 10 umgibt. Die Figur 2 zeigt im Schnitt eine Saugeinrichtung mit einer Haltevorrichtung 28, die Durchbrechungen 29 in der schalen- oder trichterförmigen Oberfläche 31 aufweist, durch welche der im Saugabschnitt 15 anliegende Unterdruck auf eine Frucht 30 wirken kann. Die Durchbrechungen 29 sind, wie generell bevorzugt, parallel zur Längsachse des Zentralrohrs 1 angeordnet und bilden radial zur Längsachse des Zentralrohrs 1 angeordnete schlitzförmige Durchbrechungen 29 in der Oberfläche mit Trichterform.

Die Schulter 9 umfasst den Bereich, in dem die erste Öffnung 4 angeordnet ist, bzw. den Bereich des ersten Endes des Zentralrohrs 1, in dem bei Beaufschlagung der Saugeinrichtung 33 mit Druckluft an Druckluftanschluss 12 Unterdruck erzeugt wird, der als Saugabschnitt 15 bezeichnet werden kann. Der Saugabschnitt 15 wird von einem Rohrabschnitt 16 gebildet, der gegenüber der Schulter 9 in einer Dichtlippe 17 mündet, die die Ansaugöffnung 18 aufspannt. Vorzugsweise ist die Ansaugöffnung 18 in einer Ebene aufgespannt, die etwa parallel zur Ebene der ersten Öffnung 5 liegt.

Der Rohrabschnitt 16 überspannt den Saugabschnitt 15 von der ringförmig um die ringförmige Auslassöffnung 7 angeordneten Schulter 9 bis zur Ebene, in der die Ansaugöffnung 18 angeordnet ist. Der Rohrabschnitt 16 kann sich entlang des Saugabschnitts 15 zur Ansaugöffnung 18 verjüngen oder aufweiten.

Optional ist der den Saugabschnitt 15 überspannende Rohrabschnitt 16 einstückig mit der Leitung 11 und der Schulter 9 gebildet.

Das Zentralrohr 10, bzw. dessen zweiter Abschnitt, kann mit der Innenoberfläche des Gehäuses 13 verbunden sein. Optional kann das Zentralrohr 1, bzw. dessen zweiter Abschnitt, einstückig mit dem Gehäuse 13 ausgebildet sein. Die Leitung 11 kann am Zentralrohr 1 oder an dessen zweiten Abschnitt fixiert sein, insbesondere in Ausführungsformen, in denen das Zentralrohr 1 von einem ersten und einem zweiten Abschnitt gebildet wird, und der erste Abschnitt entlang der Längsachse des Zentralkanals 2 zum zweiten Abschnitt des Zentralrohrs 1 verschieblich ist, beispielsweise mittels eines Gewindes, in dem erster und zweiter Abschnitt des Zentralrohrs 1 miteinander in Eingriff stehen. Ein solches Gewinde bildet ein Stellglied 33, mit dem der an die ringförmige Auslassöffnung 7 angrenzende Abschnitt des Zentralrohrs 1 gegen die Schulter 9 verschieblich ist.

Figur 2 zeigt eine Oberfläche 31 der Haltvorrichtung 28 mit Trichterform, deren Bereich um ihre Längsachse offen ist, wie dies generell bevorzugt ist.

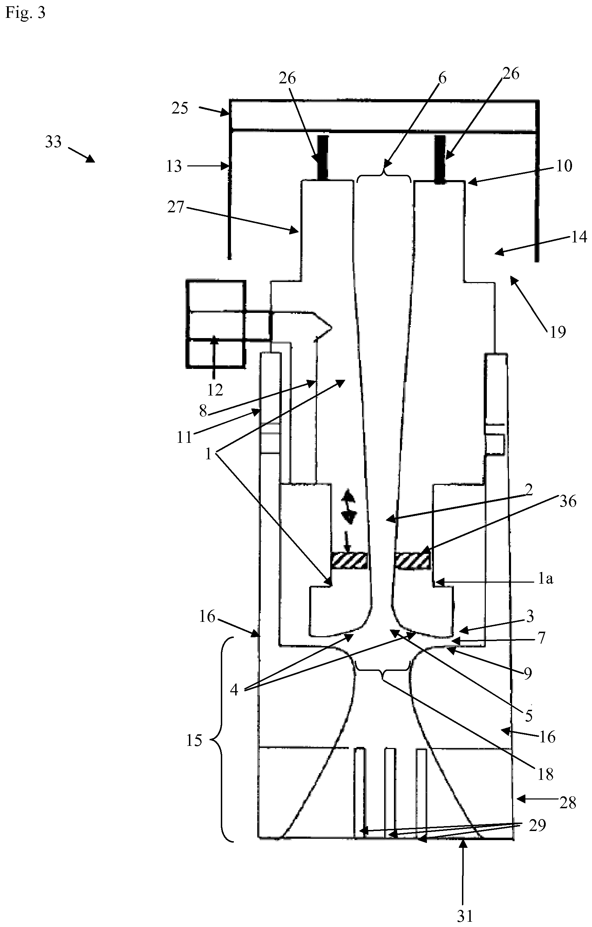

Figur 3 zeigt einen Sauggreifer mit Haltevorrichtung 28, bei dem das Zentralrohr 1 zwei gegeneinander längs der gemeinsamen Achse verschiebliche Abschnitte aufweist, die durch ein Stellglied 36 gesteuert gegeneinander beweglich sind. Der dem zweiten Ende 10 zugewandte Abschnitt des Zentralrohrs 1 ist dabei vorzugsweise am Gehäuse 13 fixiert.

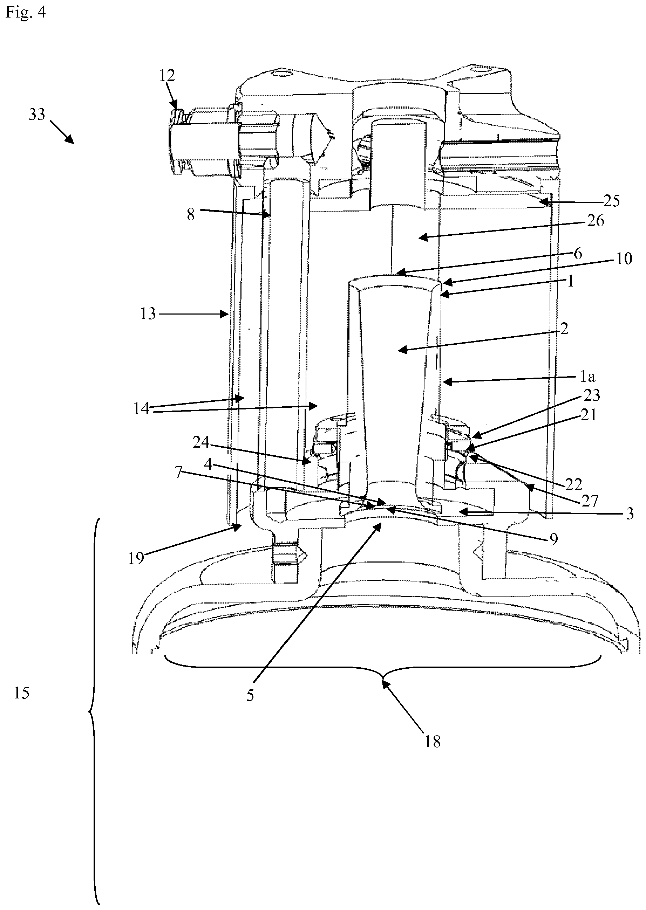

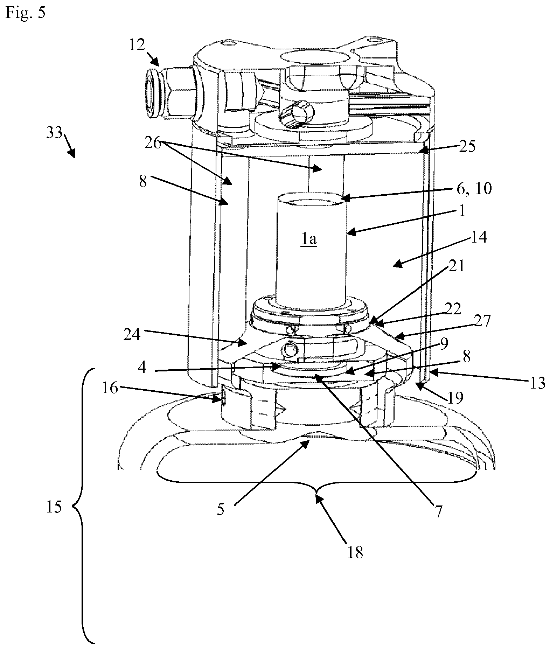

Die Figuren 4 und 5 zeigen die Saugeinrichtung 33 in bevorzugter Ausführungsform bis zur Ansaugöffnung 18, wobei die daran angeschlossene Haltevorrichtung 28 nicht gezeigt ist. Überdies zeigen die Figuren 4 und 5 die Ausführungsform, in der die Austrittsöffnung auf die Ebene der Ansaugöffnung 18 bzw. die Ebene des Eintrittquerschnitts 32 gerichtet ist und zwischen Gehäuse 13 und Rohrabschnitt 16 gebildet ist.

In der Ausführungsform von Figur 4 ist der Druckluftanschluss 12 an dem Ende des Gehäuses 13 angebracht, das gegenüber der Ansaugöffnung 18 liegt. Der Druckluftanschluss 12 ist mittels eines rohrförmigen Eintrittskanals 8 gebildet, der sich im Gehäuse 13 von dessen Ende gegenüber der Ansaugöffnung 18 zum Rohrabschnitt 16 erstreckt und weist innerhalb des Rohrabschnitts 16 einen Ringkanalabschnitt 20 auf, der sich um die ringförmige Auslassöffnung 7 erstreckt. Die ringförmige Auslassöffnung 7 wird durch die ringförmige Schulter 9 des Rohrabschnitts 16 und die beabstandete konvexe Fläche 4 der ersten Öffnung 5 des Zentralrohrs 1 gebildet. Das Zentralrohr 1 bildet auf seiner inneren Oberfläche den Zentralkanal 2, der sich von der ersten Öffnung 5 am ersten Ende 3 zur zweiten Öffnung 6 am gegenüberliegenden zweiten Ende 10 erstreckt und zwischen erstem Ende 3 und zweitem Ende 10 einen Abschnitt mit geringstem Querschnitt angrenzend an die konvexe Fläche 4 aufweist und sich zwischen diesem Abschnitt mit geringstem Querschnitt zum zweiten Ende vergrößert. Generell kann, wie auch hier dargestellt ist, der Rohrabschnitt 16 einen größeren Durchmesser als die ringförmige Schulter 9 bzw. als die ringförmige Auslassöffnung 7 aufweisen. Dabei ist bevorzugt, dass der Eintrittskanal 8 einen Ringkanalabschnitt 20 aufweist, der sich über einen Anteil des radialen Abschnitts, vorzugsweise über den gesamten radialen Abschnitt zwischen der ringförmigen Auslassöffnung 7 und dem an die ringförmige Auslassöffnung 7 angrenzenden Durchmesser des Rohrabschnitts 16 erstreckt.

Das Zentralrohr 1 weist auf seiner Außenfläche, die gegenüber dem Zentralkanal 2 liegt, eine erste Anlagefläche 21 auf. Die erste Anlagefläche 21 kann von einer Ausnehmung im Umfang des Zentralrohrs 1 gebildet sein, oder von einem das Zentralrohr 1 überragenden Ansatz 23. Die Ausnehmung bzw. ein das Zentralrohr 1 überragender Ansatz 23 sind vorzugsweise ringförmig und bilden eine ringförmige erste Anlagefläche 21. Die erste Anlagefläche 21 kann sich radial um die Längsachse des Zentralrohrs 1 in einer Ebene erstrecken oder ein Abschnitt einer Kegelfläche sein, die optional gewölbt ist. Die zweite Anlagefläche 22 ist parallel zur ersten Anlagefläche 21, so dass erste und zweite Anlagefläche 21, 22 aufeinanderliegen. Das Zentralrohr 1 ist von einem Abschnitt bzw. Stutzen 24 des Rohrabschnitts 16 umfasst bzw. längsverschieblich geführt, so dass das Zentralrohr 1 in diesen Abschnitt bzw. Stutzen 24 eingeschoben ist, bis seine erste Anlagefläche 21 gegen die zweite Anlagefläche 22 stößt. Optional ist ein Stellglied 36, z.B. ein Piezoelement, zwischen der ersten Anlagefläche 21 und der zweiten Anlagefläche 22 angeordnet. Durch Betätigen des Stellglieds 36 wird das Zentralrohr 1 entlang seiner Längsachse gegenüber dem Rohrabschnitt 16 verschoben, so dass die Höhe der ringförmigen Auslassöffnung 7 zwischen der Schulter 9 und der konvexen Fläche 4 geändert wird. Wegen des großen Einflusses der Höhe der ringförmigen Auslassöffnung 7 auf den mittels der Druckluft erzeugten Unterdruck ist das Stellglied generell zur Einstellung des erzeugten Unterdrucks während des Verfahrens zum Halten oder Transportieren geeignet. Überdies hat das Stellglied zusätzlich zu der Wirkung als Steuer- bzw. Regeleinrichtung für Unterdruck und Luftvolumen den Vorteil, mit der Schulter 9 und Bereich der konvexen Fläche 4 ein Verschlußventil für die Druckluft zu bilden.

Auch bei der in Figur 3 gezeigten Ausführungsform dient das Stellglied 36 als Steuer- bzw. Regeleinrichtung zur Einstellung des Unterdrucks und/oder als Verschlußventil, das die ringförmige Auslassöffnung 7 zwischen der Schulter 9 und Bereich der konvexen Fläche 4 verschließt.

Das Gehäuse 13 weist hier eine Trägerplatte 25 auf, die mittels zumindest eines rohrförmigen Abschnitts des Eintrittskanals 8 mit dem Rohrabschnitt 16 verbunden ist, bevorzugt mit zumindest zwei, bevorzugter mit drei Trägern 26, die sich zwischen Trägerplatte 25 und Rohrabschnitt 16 erstrecken, wobei zumindest ein Träger 26 einen Abschnitts des Eintrittskanals 8 bildet. Da die Trägerplatte 25 in einem Abstand vom zweiten Ende 10 des Zentralrohrs 1 angeordnet ist, bildet die Innenfläche des Gehäuses 13 mit der Außenfläche des Zentralrohrs 1 und den Trägern 26 den Austrittskanal 14, der sich bis zur Austrittsöffnung 19 erstreckt, die zwischen Gehäuse 13 und Rohrabschnitt 16 begrenzt ist.

In Figur 5 ist der Schnitt vor dem Zentralrohr 1 gezogen, so dass die Außenfläche des Zentralrohrs 1 sichtbar ist. Wie dargestellt, ist generell bevorzugt, dass in Ausführungsformen, in denen der Austrittskanal 14 in eine in Richtung auf die Ebene der Ansaugöffnung gerichtete Austrittsöffnung 19 mündet, der Rohrabschnitt 16 einen Stutzen 24 mit einer Oberfläche 27 aufweist, die sich von der zweiten Anlagefläche 22 bis an die Austrittsöffnung 19 erstreckt, und insbesondere mit Neigung gegen die Längsachse des Zentralrohrs 1 verläuft.

**Bezugszeichenliste:**

| | | | |
|---|---|---|---|
| 1 | Zentralrohr | 34 | Basis |
| 1a | Außenwand des Zentralrohrs 1 | 35 | Abluftleitung |
| 2 | Zentralkanal | 36 | Stellglied |
| 3 | erstes Ende des Zentralrohrs 1 | | |
| 4 | konvexe Fläche | | |
| 5 | erste Öffnung | | |
| 6 | zweite Öffnung | | |
| 7 | ringförmige Auslassöffnung | | |
| 8 | Eintrittskanal | | |
| 9 | Schulter | | |
| 10 | zweite Ende des Zentralrohrs 1 | | |
| 11 | Leitung für Druckluft | | |
| 12 | Druckluftanschluss | | |
| 13 | Gehäuse | | |
| 14 | Austrittskanal | | |
| 15 | Saugabschnitt | | |
| 16 | Rohrabschnitt | | |
| 18 | Ansaugöffnung | | |
| 19 | Austrittsöffnung | | |
| 20 | Ringkanalabschnitt | | |
| 21 | erste Anlagefläche | | |
| 22 | zweite Anlagefläche | | |
| 23 | Ansatz des Zentralrohrs | | |
| 24 | Stutzen | | |
| 25 | Trägerplatte | | |
| 26 | Träger | | |
| 27 | Oberfläche des Stutzens | | |
| 28 | Haltevorrichtung | | |
| 29 | Durchbrechung | | |
| 30 | Frucht | | |
| 31 | Oberfläche der Haltevorrichtung 28 | | |
| 32 | Eintrittsquerschnitt | | |
| 33 | Saugeinrichtung | | |

## Patentansprüche

1. Vorrichtung zum Verarbeiten von Lebensmitteln mit einer Haltevorrichtung (28), die eine Oberfläche (31) mit Trichterform, die einen Eintrittsquerschnitt (32) aufweist, und eine Unterdruckquelle mit einer Ansaugöffnung (18) aufweist, wobei der Eintrittsquerschnitt (32) endständig von der Trichterform aufgespannt ist und den größten Querschnitt der Trichterform hat, so dass ein Lebensmittel durch den Unterdruck durch den Eintrittsquerschnitt (32) in die Trichterform gesaugt werden kann, **dadurch gekennzeichnet, dass** die Haltevorrichtung (28) zumindest abschnittsweise innerhalb eines Rohrabschnitts (16) angeordnet ist, der einen Saugabschnitt (15) bildet, in dem die Ansaugöffnung (18) und die Oberfläche (32) gebildet ist und dass die Oberfläche (31) mit Trichterform Durchbrechungen (29) aufweist, die Schlitze sind, die sich parallel zur Längsmittelachse der Trichterform erstrecken und mit der Ansaugöffnung (18) verbunden sind.

2. Vorrichtung nach Anspruch 1, **dadurch gekennzeichnet, dass** die Oberfläche (31) in Richtung auf die Zentralachse der Trichterform konvex gewölbt ist.

3. Vorrichtung nach einem der voranstehenden Ansprüche, **dadurch gekennzeichnet, dass** zumindest zwei Haltevorrichtungen (28) auf einer um eine Drehachse drehbaren Basis (34) angeordnet sind und die Eintrittsquerschnitte (32) der Haltevorrichtungen (28) senkrecht zu den Radialen angeordnet sind, die auf der Drehachse stehen.

4. Vorrichtung nach Anspruch 3, **dadurch gekennzeichnet, dass** jede Halteeinrichtung (28) eine separate Unterdruckquelle aufweist.

5. Vorrichtung nach einem der voranstehenden Ansprüche, **dadurch gekennzeichnet, dass** die Unterdruckquelle eine Saugeinrichtung mit dem Rohrabschnitt (16) ist, wobei in einem Abstand zur Ansaugöffnung (18) eine um eine ringförmige Auslassöffnung (7) vom Saugabschnitt (15) beabstandete konvexe Oberfläche (4) angeordnet ist, die eine erste Öffnung (5) eines in einem Zentralrohr (1) gebildeten Zentralkanals (2) aufspannt, wobei die konvexe Fläche (4) in einem axialen Abschnitt mit dem kleinsten Querschnitt des Zentralkanals (2) mündet, an welchen sich ein Abschnitt des Zentralkanals (2) anschließt, der sich bis zu einer der ersten Öffnung (5) gegenüberliegenden zweiten Öffnung (6) aufweitet, und die ringförmige Auslassöffnung (7) über einen Eintrittskanal (8) mit einem Druckluftanschluss (12) verbunden ist.

6. Vorrichtung nach Anspruch 5 , **dadurch gekennzeichnet, dass** das Zentralrohr (1) längsverschieblich in einer Ausnehmung des Rohrabschnitts (16) geführt ist, bis eine erste Anlagefläche (21), die das Zentralrohr (1) auf seiner Außenfläche gegenüber dem Zentralkanal (2) aufweist, an einer dazu parallelen zweiten Anlagefläche (22) des Rohrabschnitts (16) anliegt, wobei das Zentralrohr (1) von einem Gehäuse (13) umfasst ist.

7. Vorrichtung nach einem der Ansprüche 5 bis 6, **dadurch gekennzeichnet, dass** die ringförmige Auslassöffnung (7) von einem radial von der Längsachse des Zentralkanals (2) beabstandeten Abschnitt der konvexen Fläche (4) und einer axial von dieser beabstandeten Schulter (9) gebildet wird, die die konvexe Fläche (4) zumindest in einem ringförmigen Bereich überdeckt.

8. Vorrichtung nach einem der Ansprüche 5 bis 7, **dadurch gekennzeichnet, dass** das Zentralrohr (1) in einer Ausnehmung eines Stutzens (24) des Rohrabschnitts (16) geführt ist und die zweite Anlagefläche (22) die Ausnehmung des Stutzens (24) umfasst.

9. Vorrichtung nach einem der Ansprüche 5 bis 8, **dadurch gekennzeichnet, dass** die der ersten Öffnung (5) gegenüberliegende zweite Öffnung (6) des Zentralrohrs (1) mittels eines Ventils zumindest teilweise verschließbar ist, das an der zweiten Öffnung (6) oder an einer Abluftleitung (35) angeordnet ist, die an der zweiten Öffnung (6) des Zentralrohrs (1) angeschlossen ist und den Austrittskanal (14) bildet.

10. Vorrichtung nach einem der Ansprüche 5 bis 9, **dadurch gekennzeichnet, dass** der Eintrittskanal (8) abschnittsweise von der Außenwandung (10) des Zentralrohrs (1) und einer koaxial angeordneten beabstandeten Leitung (11) gebildet wird.

11. Vorrichtung nach einem der Ansprüche 5 bis 10, **dadurch gekennzeichnet, dass** am Zentralrohr (1) ein Stellglied angeordnet ist, mit dem das Zentralrohr gegenüber der Schulter des Rohrabschnitts beweglich ist.

12. Vorrichtung nach einem der Ansprüche 5 bis 11, **dadurch gekennzeichnet, dass** das Zentralrohr (1) mit dem Rohrabschnitt (16) mittels eines Bajonettverschlusses oder eines Gewindes verrastet ist.

13. Vorrichtung nach einem der Ansprüche 5 bis 12, **dadurch gekennzeichnet, dass** die zweite Öffnung (6) des Zentralrohrs (1) mit einer Abluftleitung (35) verbunden ist.

14. Vorrichtung nach einem der Ansprüche 5 bis 12, **dadurch gekennzeichnet, dass** das Gehäuse (13) in einem Abstand zur zweiten Öffnung (6) angeordnet ist und einen Austrittskanal (14) umfasst, der in einer Austrittsöffnung (19) mündet, die durch den Rohrabschnitt (16) und das Gehäuse (13) begrenzt ist und auf die Ebene gerichtet ist, in der die Ansaugöffnung (18) liegt.

15. Vorrichtung nach einem der Ansprüche 8 bis 14, **dadurch gekennzeichnet, dass** der Stutzen (24) eine Oberfläche (27) aufweist, die sich von der zweiten Anlagefläche (22) zur Austrittsöffnung (19) erstreckt und gegen die Längsachse des Zentralrohrs (1) geneigt ist.

16. Vorrichtung nach einem der Ansprüche 5 bis 15, **dadurch gekennzeichnet, dass** die Saugeinrichtung (33) ein Ventil aufweist, das eingerichtet ist, periodisch die Leitung (11) für die Druckluftzufuhr zur ringförmigen Auslassöffnung (7) zu öffnen.

17. Vorrichtung nach einem der voranstehenden Ansprüche, **dadurch gekennzeichnet, dass** die Durchbrechungen durch ein Schließelement in Anzahl und/oder Größe variabel sind, das parallel zur Oberfläche (31) mit Trichterform angeordnet ist und um eine gemeinsame Mittelachse gegen die Oberfläche mit Trichterform drehbar ist.

18. Verfahren zum Herstellen von gefüllten Lebensmitteln mit dem Schritt des Haltens eines Lebensmittels mit einer Vorrichtung nach einem der voranstehenden Ansprüche mittels Ansaugens und Füllens des Lebensmittels während es in einer Vorrichtung gehalten wird.

19. Verfahren nach Anspruch 18, **dadurch gekennzeichnet, dass** ein Druckluftanschluss (12) einer Saugeinrichtung mit Druckluft beaufschlagt wird, die durch einen damit verbundenen Eintrittskanal (8) durch eine ringförmige Auslassöfnung (7) zumindest anteilig tangential gegen eine konvexe Fläche (4) strömt, die eine erste Öffnung (5) eines Zentralkanals (2) aufspannt, der sich zu einem Abschnitt mit geringstem Querschnitt verjüngt und in einem anschließenden Abschnitt bis zu einer der ersten Öffnung (5) gegenüberliegenden zweiten Öffnung (6) aufweitet, wobei ein Rohrabschnitt (16) die Ansaugöffnung (18) mit der ersten Öffnung (5) verbindet und ein Lebensmittel in dem Eintrittsquerschnitt (32) gehalten wird, der von der mit Durchbrechungen (29) mit der Ansaugöffnung (18) verbundenen Oberfläche (31) mit Trichterform einer Haltevorrichtung (28) aufgespannt wird, wobei das Lebensmittel durch die in die Durchbrechungen (29) strömende Luft gehalten wird.

## Claims

1. Device for processing of foods having a holding device (28) which has a surface (31) having a funnel shape which has an entry cross-section (32) and a low pressure source having a suction opening (18), wherein the entry cross-section (32) is terminally comprised by the funnel shape and has the largest cross-section of the funnel shape such that by the low pressure a food can be sucked through the entry cross-section (32) into the funnel shape, **characterized in that** the holding device (28) is arranged within a tube section (16) at least sectionwise which forms a suction section (15) in which the suction opening (18) and the surface (32) are formed and **in that** the surface (31) having the funnel shape has openings (29) which are slots extending in parallel to the central longitudinal axis of the funnel shape and which are connected with the suction opening (18).

2. Device according to claim 1, **characterized in that** the surface (31) in the direction of the central axis of the funnel shape is convexly curved.

3. Device according to one of the preceding claims, **characterized in that** at least two holding devices (28) are arranged on a basis (34) which is rotatable about a rotary axis and the entry cross-sections (32) of the holding devices (28) are arranged in perpendicular to the radials emerging from the rotary axis.

4. Device according to claim 3, **characterized in that** each holding device (28) has a separate low pressure source.

5. Device according to one of the preceding claims, **characterized in that** the low pressure source is a suction device having a tube section (16), wherein at a distance to the suction opening a convex surface (4) is arranged with a spacing by a ring-shaped exit opening (7) from the suction section (15), the convex surface (4) opening up a first opening (5) of a central canal (2) formed in a central tube (1), wherein the convex surface (4) discharges in an axial section having the smallest cross-section of the central canal (2), to which a section of the central canal (2) connects which expands to a second opening (6) which is opposite the first opening (5), and wherein the ring-shaped exit opening (7) is connected to a pressured air connection (12) by an entry canal (8).

6. Device according to claim 5, **characterized in that** the central tube (1) is longitudinally slidable within a recess of the tube section (16) up to a first abutting surface (21) provided by the central tube (1) on its outer surface opposite to the central canal (2) abuts against a second parallel abutting surface (22) of the tube section (16), wherein the central tube (1) is enclosed by a housing (13).

7. Device according to one of claims 5 to 6, **characterized in that** the ring-shaped exit opening (7) is formed by a section of the convex surface (4) which is at a radial distance from the longitudinal axis of the central canal (2) and by a shoulder (9) spaced axially therefrom, which covers the convex surface (4) at least in a ring-shaped area.

8. Device according to one of claims 5 to 7, **characterized in that** the central tube (1) is guided in a recess of a socket (24) of the tube section (16) and the second abutting surface (22) encompasses the recess of the socket (24).

9. Device according to one of claims 5 to 8, **characterized in that** the second opening (6) of the central tube (1) opposite the first opening (5) is closable at least partially by means of a valve which is arranged at the second opening (6) or on an exhaust duct (35) which is connected to the second opening (6) of the central tube (1) and forms the exit canal (14).

10. Device according to one of claims 5 to 9, **characterized in that** the entry canal (8) is formed sectionwise by the outer wall (10) of the central tube (1) and a coaxially arranged spaced conduct (11).

11. Device according to one of claims 5 to 10, **characterized in that** on the central tube (1) an actuator is arranged by which the central tube is moveable in relation to the shoulder of the tube section.

12. Device according to one of claims 5 to 11, **characterized in that** the central tube (1) is catched with the tube section (16) by means of a bayonet mount or by means of a thread.

13. Device according to one of claims 5 to 12, **characterized in that** the second opening (6) of the central tube (1) is connected to an exhaust duct (35).

14. Device according to one of claims 5 to 12, **characterized in that** the housing (13) is arranged at a distance to the second opening (6) and comprises an exit canal (14) which discharges in an exit opening (19) which is delimited by the tube section (16) and the housing (13) and is directed to the plane in which the suction opening (18) lies.

15. Device according to one of claims 8 to 14, **characterized in that** the socket (24) has a surface (27) which extends from the second abutting surface (22) to the exit opening (19) and is inclined towards the longitudinal axis of the central tube (1).

16. Device according to one of claims 5 to 15, **characterized in that** the suction device (33) has a valve which is arranged to periodically open the duct (11) for the admission of pressurised air towards the ring-shaped exit opening (7).

17. Device according to one of the preceding claims, **characterized in that** the openings are variable in number and/or size by a closing element, which closing element is arranged in parallel to the surface (31) having a funnel shape and which is turnable about a common central axis against the surface having funnel shape.

18. Process for producing of filled foods with the step of holding a food by means of a device according to one of the preceding claims by sucking in and filling the food while it is held in a device.

19. Process according to claim 18, **characterized in that** a pressurised air connection (12) of a suction device is supplied with pressurised air which streams through an entry canal (8) connected thereto through a ring-shaped exit opening (7) at least partially tangentially against a convex surface (4) which opens up a first opening (5) of a central canal (2) which tapers towards a section having the smallest cross-section and expands in an adjacent section up to a second opening (6) opposite to the first opening (5), wherein a tube section (16) connects the suction opening (18) to the first opening (5) and a food is held in the entry cross-section (32) which is opened up by the surface (31) having a funnel shape connected by openings (29) with the suction opening (18) of a holding device (28), wherein the food is held by the air streaming into the openings (29).

## Revendications

1. Appareil de transformation d'aliments comprenant un appareil de maintien (28) présentant une surface (31) en forme d'entonnoir, munie d'une section transversale d'entrée (32), et une source de dépression munie d'une ouverture d'aspiration (18), où la section transversale d'entrée (32) est tendue à partir de la forme d'entonnoir en position terminale et présente la plus grande section transversale de la forme d'entonnoir, de sorte qu'un aliment peut être aspiré dans la forme d'entonnoir par la dépression à travers la section transversale d'entrée (32), **caractérisé en ce que** l'appareil de maintien (28) est situé au moins dans certaines sections à l'intérieur d'une section tubulaire (16) section formant une section d'aspiration (15) contenant ouverture d'aspiration (18) et la surface (32) et **en ce que** la surface (31) en forme d'entonnoir présente des passages (29), constituant des fentes qui s'étendent en parallèle à l'axe longitudinal médian de la forme d'entonnoir et reliées à l'ouverture d'aspiration (18),

2. Appareil selon la revendication 1, **caractérisé en ce que** la surface (31) est voûtée de manière convexe en direction de l'axe central de la forme d'entonnoir.

3. Appareil selon l'une des revendications précédentes, **caractérisé en ce qu'**au moins deux appareils de maintien (28) sont prévus sur un socle (34) rotatif autour d'un axe de rotation et que les sections transversales d'entrée (32) des appareils de maintien (28) sont prévues perpendiculairement aux axes radiaux sur l'axe de rotation.

4. Appareil selon la revendication 3, **caractérisé en ce que** chaque appareil de maintien (28) présente une source de dépression séparée.

5. Appareil selon l'une des revendications précédentes, **caractérisé en ce que** la source de dépression est un appareil d'aspiration avec la section tubulaire (16), où une surface convexe (4) espacée d'une partie tubulaire (15) autour d'une ouverture d'évacuation annulaire (7), à une certaine distance de l'ouverture d'aspiration (18), qui recouvre une première ouverture (5) d'un canal central (2) constitué dans un tube central (1), où la face convexe (4) émerge dans une section axiale avec la section transversale la plus petite du canal central (2), section à laquelle se raccorde une section du canal central (2), qui s'élargit jusqu'à une second ouverture (6) opposée à la première ouverture (5), et que l'ouverture de sortie annulaire (7) est reliée à un raccord d'air comprimé (12) par le biais d'un canal d'entrée (8).

6. Appareil selon la revendication 5, **caractérisé en ce que** le tube central (1) est guidé mobile dans la sens de la longueur dans un évidement de la section tubulaire (16), jusqu'à ce qu'une première surface d'appui (21), présentant le tube central (1) sur sa face externe opposée au canal central (2), repose sur une seconde surface d'appui (22) parallèle de la section tubulaire (16), où le tube central (1) est entouré d'un logement (13).

7. Appareil selon l'une des revendications 5 à 6, **caractérisé en ce que** l'ouverture de sortie annulaire (7) est constituée d'une section de la surface convexe (4), section espacée radialement du canal central (2), et d'un épaulement (9) espacé axialement de ladite surface convexe, épaulement recouvrant la surface convexe (4) au moins dans une zone annulaire.

8. Appareil selon l'une des revendications 5 à 7, **caractérisé en ce que** le tube central (1) est guidé mobile dans un évidement d'un montant (24) de la section tubulaire (16) et la seconde surface d'appui (22) contient l'évidement du montant (24).

9. Appareil selon l'une des revendications 5 à 8, **caractérisé en ce que** la seconde ouverture (6) du tube central (1) opposée à la première ouverture (5) peut être obturée au moins partiellement à l'aide d'une soupape, qui est disposée au niveau de la seconde ouverture (6) ou d'une conduite d'aération, qui est raccordée à la seconde ouverture (6) du tube central et constitue le canal de sortie (14).

10. Appareil selon l'une des revendications 5 à 9, **caractérisé en ce que** le canal d'entrée (8) est constitué, par sections, de la paroi externe (10) du tube central (1) et d'une conduite (11) espacée coaxialement.

11. Appareil selon l'une des revendications 5 à 10, **caractérisé en ce qu'**un élément de réglage (33) est disposé au niveau du tube central (1), élément de réglage avec lequel le tube central (1) est mobile par rapport à l'épaulement de la partie tubulaire.

12. Appareil selon l'une des revendications 5 à 11, **caractérisé en ce que** le tube central (1) est verrouillé avec la section tubulaire (16) au moyen d'une fermeture à baïonnette ou d'un filet.

13. Appareil selon l'une des revendications 5 à 12, **caractérisé en ce que** la seconde ouverture (6) du tube central (1) est reliée à une conduite d'aération (35).

14. Appareil selon l'une des revendications 5 à 12, **caractérisé en ce que** le logement (13) est prévu à une certaine distance de la seconde ouverture (6) et comprend un canal de sortie (14), qui émerge dans une ouverture de sortie (19), laquelle est limitée par la section tubulaire (16) et le logement (13) et qui est orientée sur le plan dans lequel repose l'ouverture d'aspiration (18).

15. Appareil selon l'une des revendications 8 à 14, **caractérisé en ce que** le montant (24) présente une surface (27), laquelle s'étend de la seconde surface d'appui (22) à l'ouverture de sortie (19) et est inclinée contre l'axe longitudinal du tube central (1).

16. Appareil selon l'une des revendications 5 à 15, **caractérisé en ce que** l'ouverture d'aspiration (33) comprend une soupape prévue pour ouvrir périodiquement la conduite (11) pour l'arrivée d'air comprimé vers l'ouverture de sortie annulaire (7).

17. Appareil selon l'une des revendications précédentes, **caractérisé en ce que** le nombre et/ou la taille des passages sont variables grâce à un élément de fermeture, élément prévu parallèle à la surface (31) avec une forme d'entonnoir et rotatif autour d'un axe médian central commun contre la surface avec une forme d'entonnoir.

18. Procédé de fabrication d'aliments farcis, comprenant la phase de maintien d'un aliment avec un appareil selon l'une des revendications précédents, par aspiration et remplissage de l'aliment pendant son maintien dans un appareil.

19. Procédé selon la revendication 18, **caractérisé en ce qu'**un raccord d'air comprimé (12) d'un dispositif d'aspiration reçoit de l'air comprimé, air comprimé s'écoulant à travers un canal d'entrée (8) relié à celui-ci, à travers une l'ouverture de sortie annulaire (7) au moins partiellement tangentiellement contre une surface convexe (4), qui recouvre une première ouverture (5) d'un canal central (2), allant rétrécissant jusqu'à une section transversale minimale et qui s'élargit dans une section suivante jusqu'à une seconde ouverture (6) opposée à la première ouverture (5), où une section tubulaire (16) relie l'ouverture d'aspiration (18) à la première ouverture (5) et un aliment est maintenu dans la section transversale d'entrée (32), section tendue par la surface (31) reliée à l'ouverture d'aspiration (18) et pourvue de passages (29), surface avec une forme d'entonnoir d'un appareil de maintien (28), où l'aliment est maintenu est maintenu par l'air s'écoulant à travers les passages (29).
